# EUROPEAN PATENT SPECIFICATION

(11) **EP 3 484 282 B1**
(45) Date of publication and mention of the grant of the patent: **02.09.2020**
(21) Application number: 17762203.2
(22) Date of filing: 13.07.2017
(51) Int. Cl.: A01K 61/95, A01K 61/13

(54) **METHOD AND SYSTEM FOR SORTING LIVE FISH**
VERFAHREN UND SYSTEM ZUM SORTIEREN VON LEBENDEN FISCHEN
PROCÉDÉ ET SYSTÈME POUR TRIER DES POISSONS VIVANTS

(30) Priority: 13.07.2016 NO 20161168
(43) Date of publication of application: 22.05.2019
(73) Proprietor: Biosort AS, 1350 Lommedalen (NO)
(72) Inventor: SAUGEN, Bernt, 1350 Lommedalen (NO); IDSØ, Svein Tore, 0477 Oslo (NO); HAUGE, Geir Stang, 1163 Oslo (NO)
(74) Representative: Onsagers AS
(86) International application number: PCT/IB2017/054238
(87) International publication number: WO 2018/011745

(56) References cited:
- EP-A1- 2 962 556
- WO-A1-2014/204319
- WO-A1-2016/050374
- WO-A2-2013/108251
- GB-A- 2 203 540
- JP-A- H08 152 344
- JP-A- 2005 278 486
- US-A1- 2013 050 465

## Description

The invention concerns a method and system for sorting live fish.

Presently, the fish farming industry is a huge industry which is competitive vis a vis other food production from animals. The industry is relatively new and its ambition is to grow steeply in the years ahead. Today, the industry is characterized by manual operations and the level of precision is low in areas such as counting fish, measurement of bio mass, sea lice counting, disease surveillance as well as monitoring fish health and growth.

Today, a 15-20% loss of fish during a production cycle is not uncommon, and this leads to great economic losses, poor utilization of resources, poor utilization of feed, higher discharge of nutrient salts as well as poor well-being of fish ("Tap av Laksefisk i Sjø", Hogne Bleie, 2014). Sea lice and several contagious diseases are increasing problems for the industry. Resistance is a known phenomenon with excessive use of chemicals or medications on whole populations of a species.

The treatment regimens of today are mainly applied to fish in a fish pen, which means that up to 200 000 fish receives the same treatment. The treatment can be medication, use of chemicals, mechanical treatment or slaughtering. The consequence of this is enhanced risk of resistance, as well as large discharge of chemicals and drugs.

The treatment methods of present also often result in the need to starve fish, concentrating operations as well as pumping to another fish pen or well boat. A concentrating operation comprises making the available volume for fish to swim in smaller. This may for instance be done by decreasing the volume in the fish pen, and in this way increase the density of fish. This may for example be done to concentrate the fish in an area for treatment in the fish pen, or to concentrate the fish for transfer to a well boat using a suction hose or a landing net.

Often, a well boat has an integrated method of concentrating the fish when live fish is to be unloaded. This may for instance be a bulkhead which can be moved through the well in the boat holding the fish. This bulkhead is moved through the well to concentrate the fish against the part of the well from which the fish is discharged.

These treatments inflict stress on the fish, damage and possible loss of mucous layer. The mucous layer (mucosal epithelia) has been proved to be extremely important to the fish' resistance to sea lice and pathogens, and loss of mucous layer makes the fish more vulnerable than from wounds.

Presently, assessment of fish health in the fish farming industry is primarily based on manual solutions; ether directly using landing nets for collecting fish and manual inspection, and possible sampling, possibly using a submerged camera and inspecting the images manually. Automatic solutions for analyzing fish health or solutions making it possible to follow single individuals over time is not established, and no solutions for sorting out diseased fish. Today, different automatic systems for measuring bio mass are available; however, these have an error margin of about 10%, and the industry is very interested in solutions providing biomass measurements with greater accuracy.

N0330863 discloses a device and a method measuring average weight and feeding ad libidum in fish farming facilities. Several cameras are submerged into the fish farming pen and images the fish from several angles. The images are analyzed ro provide an indication of the health condition of the fish and the average weight of the fish. Individual fish can be recognized, which can be used to correct the average weight, calculate swim speed (as a measure of the health condition of the fish and number of fish per volume), etc.

N0331843 discloses a method and system for recognizing, treatment, sorting, and documenting live fish. The main object of the system is vaccination of fish, and the possibility of controlling the vaccination, possibly sort out undesired fish ahead of vaccination. The system uses image recognition of fish transferred on a conveyor belt in connection with the vaccination.

WO2014/204319 describes a system for fish farming, where the fish is regularly guided into and out of a fish cage. The fish is guided, or more precisely lured, by means of feeding. The fish is actively guided into the recording area and can be sorted according to size by adapting the sizes of the inlet and outlet ports.

JP H08152344 describes a system for discriminating the sex of fish automatically by pumping fish passed a camera. The image from the camera is used to determine the sex of the fish.

GB2203540, WO2013/108251, JP2005278486, WO2016/050374, EP2962556 and US2013/050465 represent further examples of prior art.

Thus, there is a need for new methods of monitoring fish in fish farming facilities.

The object of the invention is to provide a method and a device for sorting live fish, such that each fish can receive treatment adapted to the need of each single individual.

The object of the invention is achieved by the features of the patent claims 1 and 12.

In an embodiment, a method for sorting live fish comprises:
a) guide fish from a holding area via, i.e., through or past, a recording device,
b) identify features of individual fish which characterize the condition of the fish and characterize individuals,
c) based on the identified features, decide a desired action for each individual fish, and
d) guide each individual fish to one of several destinations at which the desired action can be performed on the fish.

To guide a fish shall in this document mean to provide for transfer of fish in a suitable way, by physically contacting the fish with a guiding means, using water flow, pressure difference, bait means, or in another way.

A system for sorting live fish comprises a holding area for holding live fish, a device for recording health and physical development of fish in the holding area, wherein the device comprises a recording area for the recording, a sorting device arranged in or after the recording area, for sorting fish and one or more transferring devices for transferring fish to one or more destinations.

The holding area is an area in which the fish to be sorted are held. This can for example be a fish farming pen, closed or semi-closed farming facility or another closed facility, or an area such as a small lake, a delimited area in ocean/lake, a holding tank, a fish pot, etc. As described above, the fish held in the holding area can have different health conditions. For instance, the weight and growth of the fish of the fish in a fish farming pen can be different, and some of the fish in the pen can be struck by disease, be more or less heavily attacked by sea lice, etc.

The transfer devices are a device adapted to move the fish from one location to another. This can for example be tubes with a water flow, through which the fish can swim or forced.

The method and system for sorting live fish allows for individual treatment of the fish adapted to the need of the fish, in that fish with the same or substantially same needs are sorted out and transferred to the same destination.

For example, at least one of the destinations is a treatment area, and following transfer to the treatment area, a condition in the fish is treated. Conditions which can be treated may for instance be treatment of salmon for sea lice, treatment of other parasites, treatment of diseases with drugs, vaccination or other treatment, feeding using specially made feed for increased growth or desired quality of the fish meat quality, etc.

In an embodiment, one or more of the destinations is/are a fish farming pen, closing net, or closed tank. Other destinations can be well boats, quarantine tanks, slaughter houses, or other areas for killing fish, etc.

Also, one or more of the destinations can be a separate area for holding fish of a certain size. For example, all fish above a specific size can be sorted out to a separate area for delivery to a slaughter facility, while fish of lesser sizes can be granted more time for growth.

The destinations can be arranged close to the holding area, or in a distance from it.

In a use of the method and system for sorting live fish, the holding area is a fish farming pen and the recording area is arranged in or very close to the pen. The fish in the pen are guided through the recording device, for example using a bait means, or by placing the recording device in a lice snorkel such that the fish swims through the recording device to get to air. The destinations can be in the form of several smaller pens, and fish with the same features or needs are transferred to the same area, such as described above. After finalizing treatment of the fish in one of the destinations the method can be repeated in the initial holding area or in one of the destinations, and the fish can from there be transferred to a suitable destination. This ensures a dynamic handling of the fish, and provides an optimal treatment of each individual.

Step a) can in one embodiment comprise imaging a fish passing a recording area using at least one imaging device, and analyze images from the imaging device and identify features of fish characterizing health condition and individuals.

In an embodiment the method comprises, using the identified features, to create a registry of individuals having passed the recording area, and store it in the memory unit, and register the features characterizing health condition in the registry for each individual.

In an embodiment, the recording device comprises at least an imaging device adapted to image the recording area, a data processor, and a memory unit, and a guiding device for guiding the fish through the recording area.

The data processor is adapted to analyze images from the imaging device and identify features of the fish present in the recording area, wherein the features characterize health condition of the fish and individuals. The features are stored in the memory unit.

The imaging device is a device imaging the recording area, and consequently, any fish present in the recording area. By allowing fish desired to be monitored to pass through the recording area, images of the fish are recorded. The imaging device can comprise one or more cameras, or other image sensors intended to image electromagnetic waves of desired wave length. These can be x-rays, ultraviolet light, visible light, infrared light, micro waves, etc. By using several sensors/cameras, a multidimensional imaging of the fish is possible.

The recording area is in one embodiment formed such that it is substantially by the field of view of the imaging device, such that fish cannot pass without being recorded. In this way, it is ensured that a complete recording of the fish desired to be monitored and recorded is achieved. In most cases, the recording area is completely or partly localized under water. Consequently, the fish can swim freely through the recording area, and thus, the recording is as stress free as possible for the fish.

The guiding device is a device causing the fish to pass through the recording area. This can for instance be a pump, suction hose, or other suction means, or a device pushing the fish against and through the recording area. Traditionally, this is performed when the fish is to be transferred from a pen to another localization. Other guiding devices can comprise a bait means arranged at one side of the recording area, and a screen device to prevent the fish from reaching the bait means without passing the recording area. The bait means can for instance be light or bait, or it can be in the form of a so-called "lice snorkel", i.e., a channel leading up to the water surface, inside which the fish swim to get to air.

A data processor analyzes the images from the imaging device, and analyzes features in the images of the fish such as bodily dimensions, geometry, pigmentation, color, condition of mucous layer, wounds and/or other features characteristic of health condition, individual recognition, or physical development. One or more of the features is/are used for identifying single individuals, and each single individual is stored in the memory unit. Further features are recorded in the same registry, connected to each individual.

The memory unit is a unit able to store data. In many embodiments, the memory unit will be physically connected to the data processor; however, it can also be wirelessly connected to the data processor, either at the same location, at a remote location, or in the form of a so-called cloud storage solution.

The data processor can in one embodiment be adapted to calculate the bio mass of a group of fish. For instance, based on bodily dimensions, the mass of an individual can be calculated, and if all individuals are recorded, the bio mass of the complete group of fish can be calculated. If the recording and monitoring of health and physical development of live fish shall be performed in a fish farming pen, or other limited amount of fish, in some embodiments, a selection of fish can be recorded and the mass calculated, and then these mass data can be extrapolated to estimate the bio mass of the complete amount of fish.

At a later stage, steps a) to d) can be repeated to be able to analyze the development of the fish. The features characterizing health condition are compared to features of the same individual from at least a previous recording, and the comparison of features is used to analyze the development of the fish. Examples thereof is the development of individual wounds in single individuals, e.g., based on deviation from expected growth based on data from previous measurements, but which still have a momentary observable weight within the normal of the population, recording increased amounts of parasites in the fish, etc.

The steps above can be repeated once or several times with a desired time interval, for example each day, each week, each month, etc.

In an embodiment the device comprises two chambers arranged on each side of the recording area, and the guiding device guides the fish from one chamber to the second via the recording area. The guidance of the fish can for instance be performed as mentioned above. For example, the chambers can be two chambers in a fish pen, two pens can constitute each of two chambers, or other arrangements. In cases with two fish pens having a guiding device arranged between them for transferring the fish, the fish can for example be brought into the guiding device using a concentrating device in the pen in which the fish initially resides, which is gradually moved, or which in any way makes the volume of the pen smaller, such that the fish by itself chose to swim into the guiding device to find more space. This can be performed using a plate, net, etc.

In an embodiment, the system comprises a device for removing parasites using light, e.g., as disclosed in NO331345. Other known treatment methods can be used, such as Thermalicer (NO332298), well boat treatment, etc. Systems like this can be integrated in the recording area, or connected to the device before or after the recording area, e.g., in a fish pen.

In an embodiment, the device may comprise a RFID reader. In this case, each individual fish is tagged with a RFID tag, for use in identifying individuals. This can be used as a substitute for, or in addition to, individual recognition in the images, and can also be used to confirm individual recordings.

The invention will now be described in more detail using examples, and with reference to the appended figures.
Figure 1 schematically shows a recording device for use with the invention.
Figure 2 schematically shows recording device used in a fish farming pen.
Figure 3 shows an alternative embodiment of a recording device in a fish farming pen.
Figure 4 shows yet another alternative embodiment used in a fish farming pen.
Figure 5 shows yet another alternative embodiment used in a fish farming pen.
Figure 6 shows an embodiment of the invention using two fish farming pens.
Figure 7 shows yet another alternative embodiment of the invention used in a fish farming pen.
Figure 8 shows yet another alternative embodiment of the invention used in a fish farming pen.
Figure 9 shows an embodiment of the invention using two fish farming pens.
Figure 10 shows an embodiment of a system for sorting live fish.
Figure 11 illustrates an example of the uses of the embodiment of figure 4.

In the description of the figure, a device for recording and monitoring health and physical development of fish is generally referred to as a fish health scanner.

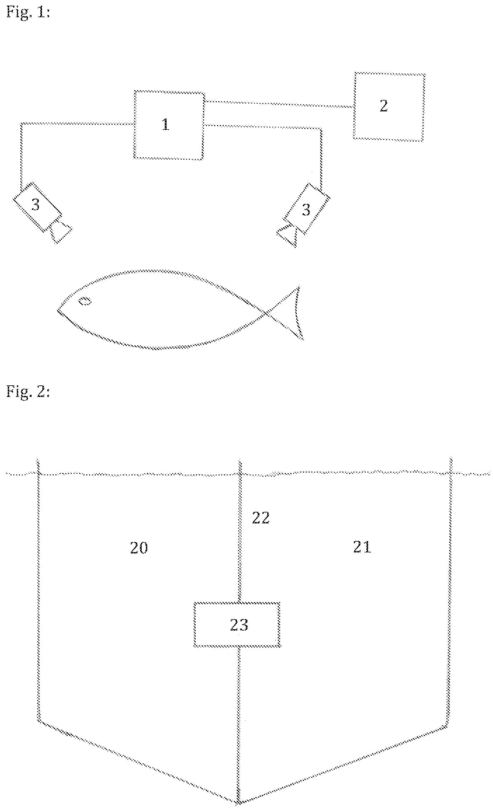

Figure 1 schematically shows a device for recording and monitoring fish health consisting of two imaging devices in the form of cameras 3, which images fish present in the recording area to record fish health and fish well-being of single individuals swimming freely, e.g., in a fish farming pen. The image data are processed by a data processor 1 for analyzing images from the imaging device and identify features of the fish characterizing health condition and individuals. Data/features for each individual are stored in a database/registry 2 for later use.

Figure 2 schematically shows a fish farming pen divided by a vertical separation wall 22. The separation wall divides the pen into two separate chambers 20 and 21. The two chambers are connected by a guiding device in the form of a channel 23, through which the fish can swim freely. In the channel, a fish health scanner is arranged, which record fish health and fish well-being, such as described above. The fish are lured or pushed from one chamber to the other in a specified time interval to provide a substantially continuous monitoring of all the fish.

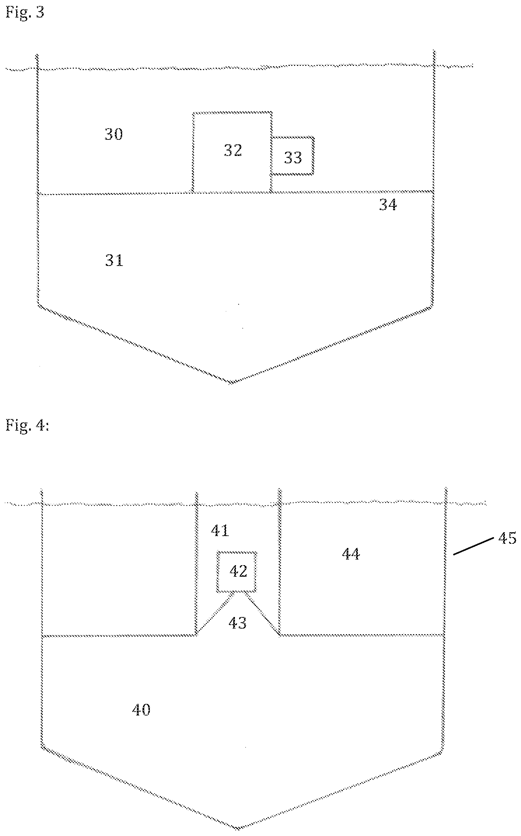

Figure 3 schematically shows a fish farming pen with a horizontal separation wall 34 inside the pen, which divides the pen into a lower chamber 31 and an upper chamber 30. Recording and monitoring fish health is initiated when all the fish are present in the lower chamber 31. The fish are lured into chamber 32 using light, feed, or by gently decreasing the volume of chamber 31. When a suitable number of fish has entered the chamber 32, this will be closed off from chamber 31. The fish is guided or forced further into the fish health scanner 33, and swim freely out into upper chamber 30. After having transferred substantially all the fish from chamber 31 to chamber 30, the process is completed, and substantially all the fish have been recorded. The process may be performed manually or automatically, and is repeated in predetermined time intervals of typically 4-8 weeks to create a complete picture of fish health and fish well-being over time.

Figure 4 schematically shows a fish farming pen 45 with a lice snorkel 41. The fish are held in chamber 40, and are thus forced to stay below a depth of 8-10 meters to avoid sea lice and other parasites which mainly reside in the upper layers of the water column. Salmon has an open swim bladder which must be replenished with air every 7-14 days. The fish will then swim up towards the surface, which is available to it through an inner tube inside the pen, called lice snorkel 41. This cyclic migration to the surface can be exploited to guide 43 fish through a fish health scanner 42. Using the invention in this embodiment, the chamber 40 may constitute the holding area, and, separate enclosures or tanks can be arranged in the space 44 which is constituted between the tube 41 and the outer walls 45.

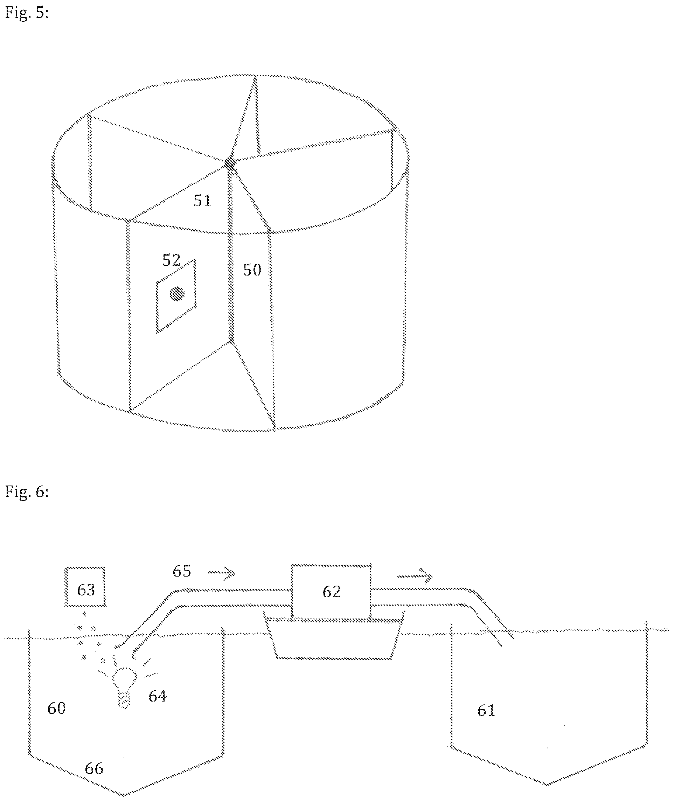

Figure 5 schematically shows a fish farming pen with movable bulkhead 50 and 51. The movable bulkheads are used to move fish from one chamber to the next through a fish health scanner 52 which record fish health and fish well-being for passing fish.

Figure 6 schematically shows two fish farming pens 60 and 61. In pen 60, fish are lured in towards the opening of a suction hose 65 using light 64, feed 63, or gentle pushing 66. The fish are transported up into a holding chamber 62 on a raft 67, on which they are scanned before transport to pen 61.

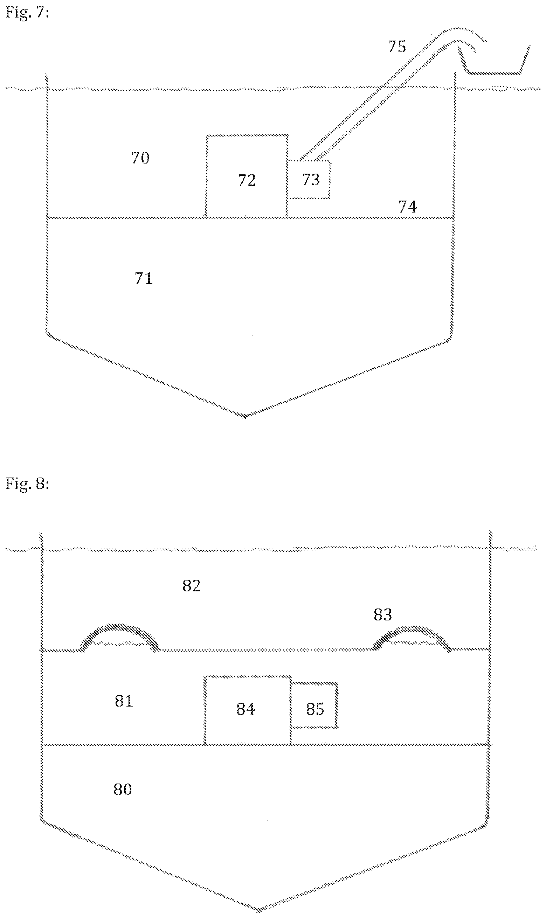

Figure 7 schematically shows a fish farming pen with a horizontal separation wall in the pen 74 which divides the pen into a lower chamber 71 and an upper chamber 70. The recording of fish health is initiated by all the fish are being held in the lower chamber 71. The fish are lured into chamber 72 using light, feed, or by gently making the volume of chamber 71 smaller. When a suitable number of fish have entered chamber 72, this will be closed off from chamber 71. The fish are guided or forced further into fish health scanner 73, and, healthy and approved fish freely swim into the upper chamber 70. Weak, wounded, or diseased fish are sorted out through a hose 75 to an external chamber. After having transferred substantially all the fish from chamber 71 to chamber 70, the process is finalized, and, substantially all the fish have been scanned and sorted. The process is performed automatically, and typically takes 2-4 days. The cycle is repeated within predetermined time intervals of typically 4-8 weeks, to create a complete picture of fish health and fish well-being over time.

Figure 8 schematically shows a fish farming pen in which fish are held permanently submerged in chambers 80 and 81. The fish have access to an artificial water surface to fill the swim bladder in open domes 83 filled with air. The domes can have any suitable shape, e.g., rounded or square. The fish are alternately moved from chamber 80 to chamber 81 through a guiding device 84 to the fish health scanner 85 using gentle forcing or baiting.

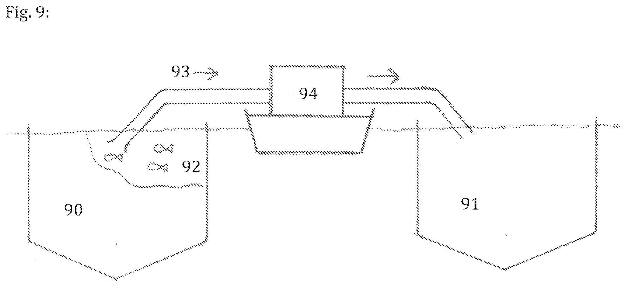

Figure 9 schematically shows two fish farming pens 90 and 91. Fish are transferred from pen 90 to 91 using a traditional forcing or pumping operation 92. The fish are pumped or swim through a fish health scanner 94 for recording and sorting.

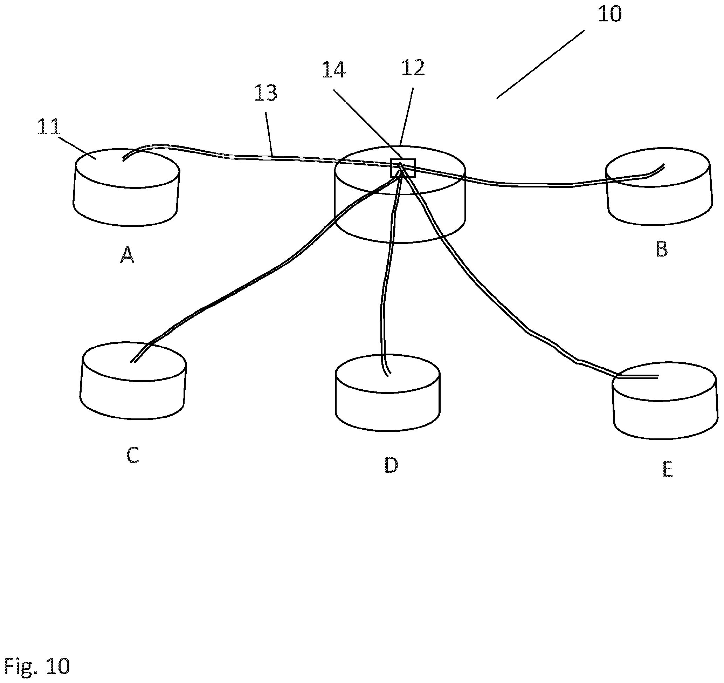

Figure 10 schematically shows use of the method and system 10 for sorting live fish. A holding area 12 for holding live fish is shown, e.g., a fish farming pen for salmon. The pen 12 comprises a device 14 for recording health and physical development of the fish in the pen/holding area. In the recording device 14 there is a recording area for the recording. In the recording device, features are identified of individual fish, which characterize the condition of the fish and individuals. Based on the identified features, a desired action is decided for each individual fish, such as sea lice treatment, further growth, vaccination, etc. The recording device can comprise a sorting device arranged in or after the recording area, and the fish are sorted according to desired action for each fish. Around the holding area/pen 12, there are positioned several pens 11 (A, B, C, D, E). These pens are connected to the holding area 12 by transferring devices 13, e.g., in the form of hoses. Each of the fish pens A, B, C, D, E are assigned a particular action, as mentioned above, and constitutes a destination for that action. Consequently, each fish is guided to one of these pens, wherein the desired action can be performed to the fish. For example, pen A can receive fish in need of antibiotics treatment, pen B receives fish in need of sea lice treatment, pen C receives fish in need of specially made feed, pen C and E receives fish of different sizes without further needs.

The recording and sorting can be repeated for the holding area, and also for each of the further pens 11 (A, B, C, D, E) such that a dynamic system for farming and treatment of fish is obtained.

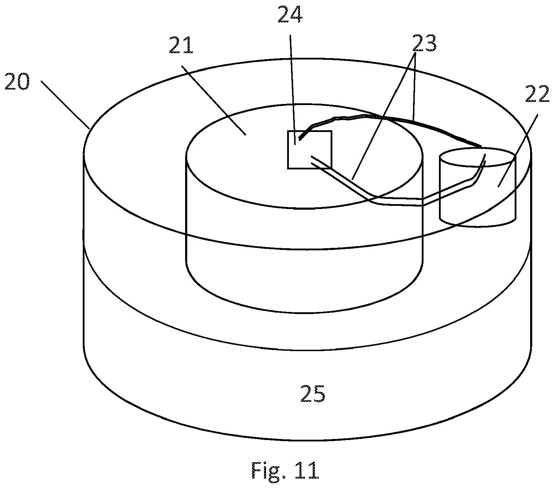

Figure 11 illustrates an example as described in relation to Figure 4. A fish pen 20 has a holding area 25, in which the fish are held, and thus, are forced to reside at a desired depth to avoid sea lice and other parasites which mainly stay in the upper layers of the water column. Then, the fish will regularly swim towards the surface, which is available to the fish through an inner tube 21 in the pen, and, thus, will then be guided through the recording device 24, wherein desired features of the fish are identified and assessed. As a result of the identified features, some fish will be guided via tube 23 to a destination in the form of a tank 22 arranged between the outer wall of the pen 20 and the inner tube 21. A desired action may the be performed to the fish while in the tank 22.

## Claims

1. Method of sorting live fish comprising:
a) guide fish from a holding area (40, 25) arranged under the surface to the surface via a recording device, wherein the fish is guided to the surface using a channel/tube (41, 21), such that the fish can swim up through the channel/tube and replenish their swimming bladder with air,
b) identify features of individual fish which characterize the condition of the fish and individuals,
c) based on the identified features, decide a desired action for each individual fish, and
d) guide each individual fish to one of several destinations at which the desired action can be performed on the fish.

2. Method according to claim 1, wherein the holding area is a fish farming pen or a closed facility.

3. Method according to claim 1, wherein at least one of the destinations is a treatment area and the method comprises treatment of a condition of the fish.

4. Method according to claim 1, wherein at least one of the destinations comprises a fish farming pen, closing net, or closed facility.

5. Method according to claim 1, comprising in one of the destinations killing the fish.

6. Method according to claim 1, comprising in one of the destinations to hold or treat the fish for diseases or parasites.

7. Method according to claim 1, wherein one or more of the destinations is a tank arranged between the outer wall and the channel/tube of the pen.

8. Method according to claims 6 or 7, wherein parasites are removed from the fish using light.

9. Method according to claim 1, wherein steps a) to d) are repeated as the holding area when repeating is one of the destinations from the previous performance of the method.

10. Method according to claim 9, wherein the repetition takes place with a predetermined time interval.

11. Method according to claim 1, wherein step a) comprises:
- imaging fish passing a recording area using at least one imaging device,
- analyzing images from the imaging device and identify features of fish characterizing health condition and individuals.

12. System for sorting live fish comprising:
- a holding area (40/25) for holding live fish arranged under the surface such that the fish avoids sea lice or other parasites,
- a channel/tube (41, 21), with access to the surface, through which the fish can swim up to replenish their swim bladder with air,
- a device (42, 24) arranged in the channel/tube for recording health and physical development of fish, the device comprising a recording area for the recordal,
- a sorting device arranged in or after the recording area, for sorting fish,
- one or more transfer devices (23) for transferring fish to one or more destinations.

13. System according to claim 12, wherein the holding area is a fish farming pen or a closed facility.

14. System according to claim 12, wherein at least one of the destinations is a treatment area for treating a condition in the fish.

15. System according to claim 12, wherein at least one of the destinations comprises a fish farming pen, closing net, or a closed facility.

16. System according to claim 12, wherein one of the destinations is an area for killing the fish.

17. System according to claim 12, wherein one of the destinations is an area for holding and treating the fish for diseases or parasites.

18. System according to claim 12, comprising a device for removing parasites using light.

19. System according to claim 12, wherein the one or more destination(s) is/are in the form of a tank arranged between arranged between the outer wall of the pen and the channel/tube.

## Patentansprüche

1. Verfahren zum Sortieren lebender Fische, das umfasst:
a) Leiten von Fischen von einem unter der Oberfläche angeordneten Haltebereich (40, 25) an die Oberfläche über eine Aufzeichnungsvorrichtung, wobei die Fische unter Verwendung eines Kanals/Rohrs (41, 21) so an die Oberfläche geleitet werden, dass die Fische durch den Kanal/das Rohr nach oben schwimmen und ihre Schwimmblase mit Luft auffüllen können,
b) Identifizieren von Merkmalen einzelner Fische, die den Zustand der Fische und von Individuen kennzeichnen,
c) Bestimmen einer gewünschten Aktion für jeden einzelnen Fisch auf Basis der identifizierten Merkmale, und
d) Leiten jedes einzelnen Fisches zu einem von mehreren Zielen, an dem die gewünschte Aktion an dem Fisch durchgeführt werden kann.

2. Verfahren nach Anspruch 1, wobei der Haltebereich ein Fischzucht-Gehege oder eine geschlossene Anlage ist.

3. Verfahren nach Anspruch 1, wobei wenigstens eines der Ziele ein Behandlungsbereich ist und das Verfahren Behandlung einer gesundheitlichen Störung der Fische umfasst.

4. Verfahren nach Anspruch 1, wobei wenigstens eines der Ziele ein Fischzucht-Gehege, ein Schließnetz oder eine geschlossene Anlage umfasst.

5. Verfahren nach Anspruch 1, das an einem der Ziele Töten der Fische umfasst.

6. Verfahren nach Anspruch 1, das an einem der Ziele Halten oder Behandeln der Staub auf Krankheiten oder Parasiten umfasst.

7. Verfahren nach Anspruch 1, wobei eines oder mehrere der Ziele ein Behälter ist/sind, der zwischen der Außenwand und dem Kanal/Rohr des Geheges angeordnet ist.

8. Verfahren nach Anspruch 6 oder 7, wobei Parasiten unter Einsatz von Licht aus den Fischen entfernt werden.

9. Verfahren nach Anspruch 1, wobei die Schritte a) bis d) wiederholt werden, wenn der Haltebereich beim Wiederholen eines der Ziele von der vorherigen Durchführung des Verfahrens ausgehend ist.

10. Verfahren nach Anspruch 9, wobei die Wiederholung mit einem vorgegebenen Zeitintervall erfolgt.

11. Verfahren nach Anspruch 1, wobei Schritt a) umfasst:
Abbilden von Fischen, die einen Aufzeichnungsbereich passieren, unter Einsatz wenigstens einer Bilderzeugungsvorrichtung,
Analysieren von Bildern von der Bilderzeugungsvorrichtung und Identifizieren von Merkmalen von Fischen, die Gesundheitszustand und Individuen charakterisieren.

12. System zum Sortieren lebender Fische, das umfasst:
einen Haltebereich (40/25) zum Halten von lebenden Fischen, der unter der Oberfläche so angeordnet ist, dass die Fische Seeläusen oder anderen Parasiten entgehen,
einen Kanal/ein Rohr (41, 21) mit Zugang zu der Oberfläche, durch den/das die Fische nach oben schwimmen können, um ihre Schwimmblase mit Luft aufzufüllen,
eine Vorrichtung (42, 24) die in dem Kanal/Rohr angeordnet ist, um Gesundheitszustand und körperliche Entwicklung von Fischen aufzuzeichnen, wobei die Vorrichtung einen Aufzeichnungsbereich für die Aufzeichnung umfasst,
eine Sortiervorrichtung, die in oder nach dem Aufzeichnungsbereich zum Sortieren von Fischen angeordnet ist,
eine oder mehrere Überführungsvorrichtung/en (23) zum Überführen von Fischen an ein oder mehrere Ziel/e.

13. System nach Anspruch 12, wobei der Haltebereich ein Fischzucht-Gehege oder eine geschlossene Anlage ist.

14. System nach Anspruch 12, wobei wenigstens eines der Ziele ein Behandlungsbereich zum Behandeln einer gesundheitlichen Störung der Fische ist.

15. System nach Anspruch 12, wobei wenigstens eines der Ziele ein Fischzucht-Gehege, ein Schließnetz oder eine geschlossene Anlage umfasst.

16. System nach Anspruch 12, wobei eines der Ziele ein Bereich zum Töten der Fische ist.

17. System nach Anspruch 12, wobei eines der Ziele ein Bereich zum Halten und Behandeln von Krankheiten der Fische oder gegen Parasiten ist.

18. System nach Anspruch 12, das eine Vorrichtung zum Entfernen von Parasiten unter Einsatz von Licht ist.

19. System nach Anspruch 12, wobei das eine oder die mehreren Ziel/e die Form eines Behälters hat/haben, der zwischen der Außenwand des Geheges und dem Kanal/Rohr angeordnet ist.

## Revendications

1. Procédé de tri de poissons vivants comprenant :
a) le guidage des poissons depuis une zone d'attente (40, 25) agencée sous la surface vers la surface via un dispositif d'enregistrement, dans lequel les poissons sont guidés vers la surface à l'aide d'un canal/tube (41, 21), de sorte que les poissons puissent remonter par le canal/tube et remplir leur vessie natatoire avec de l'air,
b) l'identification de caractéristiques de poissons individuels qui caractérisent l'état des poissons et des individus,
c) sur la base des caractéristiques identifiées, la décision d'une action souhaitée pour chaque poisson individuel, et
d) le guidage de chaque poisson individuel vers une destination parmi différentes destinations auxquelles les actions souhaitées peuvent être réalisées sur les poissons.

2. Procédé selon la revendication 1, dans lequel la zone d'attente est un parc de pisciculture ou une installation fermée.

3. Procédé selon la revendication 1, dans lequel au moins l'une des destinations est une zone de traitement et le procédé comprend le traitement d'un état du poisson.

4. Procédé selon la revendication 1, dans lequel au moins l'une des destinations comprend un parc de pisciculture, un filet fermant, ou une installation fermée.

5. Procédé selon la revendication 1, comprenant dans l'une des destinations l'abattage des poissons.

6. Procédé selon la revendication 1, comprenant dans l'une des destinations le maintien ou le traitement des poissons pour des maladies ou des parasites.

7. Procédé selon la revendication 1, dans lequel une ou plusieurs des destinations sont un vivier agencé entre la paroi externe et le canal/tube du parc.

8. Procédé selon les revendications 6 ou 7, dans lequel des parasites sont éliminés des poissons à l'aide de lumière.

9. Procédé selon la revendication 1, dans lequel les étapes a) à d) sont répétées lorsque la zone d'attente lors de la répétition est l'une des destinations de la réalisation antérieure du procédé.

10. Procédé selon la revendication 9, dans lequel la répétition a lieu à un intervalle de temps prédéterminé.

11. Procédé selon la revendication 1, dans lequel l'étape a) comprend :
- la prise d'image de poissons passant par une zone d'enregistrement à l'aide d'au moins un dispositif de formation d'image,
- l'analyse d'images provenant du dispositif de formation d'image et l'identification de caractéristiques des poissons caractérisant l'état de santé et les individus.

12. Système pour trier des poissons vivants comprenant :
- une zone d'attente (40/25) destinée à contenir des poissons vivants agencée sous la surface de sorte que les poissons évitent les poux de poisson ou d'autres parasites,
- un canal/tube (41, 21), avec un accès à la surface, par lequel les poissons peuvent remonter pour remplir leur vessie natatoire avec de l'air,
- un dispositif (42, 24) agencé dans le canal/tube pour enregistrer la santé et le développement physique des poissons, le dispositif comprenant une zone d'enregistrement pour l'enregistrement,
- un dispositif de tri agencé dans ou après la zone d'enregistrement, pour trier les poissons,
- un ou plusieurs dispositifs de transfert (23) pour transférer les poissons vers une ou plusieurs destinations.

13. Système selon la revendication 12, dans lequel la zone d'attente est un parc de pisciculture ou une installation fermée.

14. Système selon la revendication 12, dans lequel au moins l'une des destinations est une zone de traitement pour traiter un état chez les poissons.

15. Système selon la revendication 12, dans lequel au moins l'une des destinations comprend un parc de pisciculture, un filet fermant, ou une installation fermée.

16. Système selon la revendication 12, dans lequel l'une des destinations est une zone pour l'abattage des poissons.

17. Système selon la revendication 12, dans lequel l'une des destinations est une zone pour contenir et traiter les poissons pour des maladies ou des parasites.

18. Système selon la revendication 12, comprenant un dispositif pour éliminer des parasites à l'aide de lumière.

19. Système selon la revendication 12, dans lequel les une ou plusieurs destination(s) est/sont sous la forme d'un vivier agencé entre la paroi externe du parc et le canal/tube.
